# EUROPEAN PATENT SPECIFICATION

(11) **EP 0 970 746 B1**
(45) Date of publication and mention of the grant of the patent: **15.10.2003**
(21) Application number: 99113283.8
(22) Date of filing: 08.07.1999
(51) Int. Cl.: B01J 37/00, F01N 3/28

(54) **Method of producing a catalytic converter**
Verfahren zur Herstellung eines katalytischen Konverters
Procédé pour la fabrication d'un convertisseur catalytique

(30) Priority: 10.07.1998 JP 19564198
(43) Date of publication of application: 12.01.2000
(73) Proprietor: Mazda Motor Corporation, Aki-gun, Hiroshima 735-8670 (JP); Tokyo Roki Co., Ltd., Yokohama-shi Kanagawa (JP)
(72) Inventor: Takemoto, Takashi, c/o Mazda Motor Corporation, Hiroshima (JP); Shigetsu, Masahiko, c/o Mazda Motor Corporation, Hiroshima (JP); Ichikawa, Satoshi, c/o Mazda Motor Corporation, Hiroshima (JP); Misonoo, Kazuo, c/o Mazda Motor Corporation, Hiroshima (JP); Miki, Shinsuke, c/o Tokyo Roki Co. Ltd., Yokohama-shi, Kanagawa (JP); Tokuyama, Tadashi, c/o Tokyo Roki Co. Ltd., Yokohama-shi, Kanagawa (JP)
(74) Representative: Gossel, Hans K., Dipl.-Ing.

(56) References cited:
- EP-A- 0 383 636
- EP-A- 0 722 767
- WO-A-98/24535

## Description

This invention relates to a method of producing a catalytic converter for purifying exhaust gases from an engine of a vehicle.

One method of producing a catalytic converter which is disclosed in Japanese Unexamined Patent Publication No. 4- 346837 comprises a process including coating a slurry of a mixture of a perovskite compound oxide, a zirconia binder and water on a ceramic honeycomb substrate and drying and calcining the mixture on the honeycomb substrate. Typically, in catalytic converters for purifying exhaust gases from automobile engines, a noble metal is used as a catalytic material which is carried by a support material and alumina sol is used as a binder.

Since a catalytic converter starts to show an effective catalytic action when attaining an activation temperature, it is effective to make use of an electric heater so as to rise the temperature of the catalytic converter as soon as possible. Installing an electric heater to a catalytic converter mounted on a vehicle results in a rise in cost of the catalytic converter and peeling of the catalyst layer due to thermal shocks and vibrations. Further, the catalytic converter and the electric heater are put in high temperature surroundings, which brings down their liability. Therefore, it is preferred to quickly rise the temperature of a catalytic converter without making use of a heater.

It has been known in the art as one of the techniques for quickly rising the temperature of a catalytic converter to employ a honeycomb substrate having a heat capacity lowered by forming a thin partition wall between each adjacent cells. This thinly walled honeycomb substrate provides, on one hand, an increase in surface area contributory to reaction of the catalyst, which is advantageous to improvement of the activation of catalyst. However, since the thinly walled honeycomb substrate is brittle and, on the other hand, necessitates having dense partition walls in order to make up a decline in structural strength of the honeycomb substrate due to thinness of the walls. However, forming partition walls dense causes a decrease in surface irregularities of the partition walls or makes pores exposed to the air of the partition walls small, which results in a decline in adhesion of a catalyst layer to the honeycomb substrate and, consequently, leads to easy peeling of the catalyst layer due to vibrations and cyclic temperature changes and a decline in catalytic performance due to peeling of the catalyst layer.

It is therefore an object of the invention to provide a method of producing a catalytic converter which provides an increase in adhesion of a catalyst layer to a substrate.

The above object of the invention is accomplished by applying a special stirring treatment to make binder particles uniform in size or in shape.

The invention is directed to a method of producing a catalyst for purifying exhaust gases which comprises a catalyst layer containing catalytic particles comprising catalytic metal particles carried by a support material and coated on a substrate. According to the invention the method comprises the steps of pulverizing a slurry of a mixture of said catalytic particles and zirconia binder particles containing water in a ball mill, with zinconia balls charged therein, coating said pulverized mixture slurry on said substrate, and drying and calcining said mixture of said shaped zinconia binder particles and said catalytic particles coated on said substrate.

According to a preferred embodiment of the invention, a method of producing a catalytic converter with a catalyst material carried together with a binder on a substrate for purifying exhaust gases comprises the steps of pulverizing a slurry of a mixture of catalytic particles, water and zirconia particles by a ball mill to shape them suitable for binder particles and coating a mixture of the zirconia binder particles and catalyst particles on the substrate. The zirconia binder particles pulverized by a ball mill are turned into particles small in diameter or globular. Such binder particles are effectively filled not only in spaces among the catalyst particles but also in a space between the catalyst and the surface of a substrate. In consequence of this, a catalyst layer (a layer of a mixture of catalyst particles and binder particles) formed on a substrate is made dense and increases the number of contact points between the binder particles and the substrate surface with an effect of preventing itself from peeling off from the substrate due to vibrations. Further, a small size of binder particles easily cut into the substrate even if the substrate surface is dense. That is, what is called an anchoring effect becomes manifest, so as to improve adhesion of the catalyst layer to the substrate.

While alumina may be used as a binder material, the zirconia particles are more effectively pulverized to small globular particles by a ball mill than the alumina particles. This is because that, since the aluminum particle takes a needle-like form typically having a high aspect ratio and, in consequence, remains needle-like rather than globular even after having been pulverized by the ball mill, the filling efficiency with which the alumina particles are filled in spaces among catalyst particles is not so high, and the degree with which the alumina particles cut into the substrate is not so strong. As contrasted with the alumina particles, the zirconia particle has only a low aspect ratio by nature and is pulverized by the ball mill to turn into a near globular particle.

Zirconia binder particles are stirred and pulverized together with catalytic particles and water by the ball mill, which prepares a catalyst slurry with an effect of increasing dispersion of the catalyst and binder particles. The catalyst slurry can be coated on a substrate as it is and then dried and calcined to complete a catalytic converter.

Catalyst particles take the form of catalytic metal particles carried on particles of a support material. Noble metals such as Pt, Pd and Rh or transition metals such as Cu may be employed as the catalytic metal, and inorganic compounds, in particular porous inorganic compounds such as alumina, ceria and zeolite can be employed as the support material. It is preferred to use a ceramic-made substrate.

According to the method of producing a catalytic converter of the invention, binder particles are stirred by a ball mill to turn into particles suitable in shape and/or size as a binder for fixedly bearing catalyst particles on a substrate. This leads to prevention of the catalyst from peeling off from the substrate and maintenance of intended performance of the catalytic converter for a duration of long time. Further, when stirring binder particles together with catalytic particles and water by the ball mill, a catalyst slurry is prepared at the same time as both catalytic particles and binder particles are pulverized to turn into small particles. While this increases dispersion of the catalytic and binder particles and advantageously improves the performance of catalytic converter, it increases the efficiency of producing a catalytic converter.

The ball mill may be charged with zirconia balls.

The above and other objects and features of the present invention will be understood from the following description of a specific embodiment thereof when considering in conjunction with the accompanying drawings, in which:
Figure 1 is a graph showing the peeling ratio of example catalyst E-I and specimen catalyst E-II and comparative example catalysts C-1 - C-IV;
Figure 2 is a graph showing T-50 temperature of example catalyst E-I and comparative example catalyst C-IV;
Figure 3 is a graph showing C-500 purification efficiency of example catalyst E-I and comparative example catalyst C-IV;
Figure 4 is a graph showing T-50 temperature of comparative example catalysts C-I - C-III;
Figure 5 is a graph showing C-500 purification efficiency of comparative example catalysts C-I - C-III; and
Figure 6 is a graph showing the relationship of a peeling ratio to a binder content.

The term "T-50 temperature" as used herein shall mean and refer to an inlet temperature of an exhaust gas at which a catalyst purifies 50 % of harmful components in the exhaust gas and the term "C-300 purification efficiency" and "C-500 purification efficiency" as used herein shall mean and refer to an exhaust gas purification efficiency at an inlet temperature of 300°C of an exhaust gas and an inlet temperature of 500°C of an exhaust gas, respectively. Further, the term "binder content" as used herein shall mean and refer to a ratio in weight % of the weight of a binder relative to the total weight of the binder and a catalyst material, these binder and catalyst material being mixed as a mixture slurry which is coated as a catalyst layer on a substrate.

The present invention will be described specifically with reference to examples and comparative examples hereafter, however it should be noted that the present invention is not intended to be restricted within those specific examples.

Each example catalyst or each comparative example catalyst was made as comprising under and over catalyst layers formed on a porous wall of a honeycomb substrate so as to have a total weight of 7 g/L (7 g per one litre of substrate) of noble metals including platinum (Pt), palladium (Pd) and rhodium (Rh) with a weight ratio of 1 : 14 : 2.5 and to contain less than 1 % of impurities.

### EXAMPLE I

In this example, an under catalyst layer of the example catalyst E-I was formed as follows. A powder mixture of γ-alumina, ceria and Ce-Pr compound oxide was dissolved in water to provide a slurry. The mixture slurry was mixed with a solution of dinitro-diamine palladium and heated and dried to provide a solid mixture. Subsequently, the solid mixture was pulverized as a material for an under catalyst layer. The catalyst material, a zirconia binder and water were put in a drum of a vibrating ball mill and pulverized and mixed with vibrations. The catalytic particles and the zirconia binder particles were vibrated together with balls in the drum such that the catalytic particles and the zirconia binder particles collided against the balls and the drum wall and were pulverized with shearing and frictional actions to be made uniform in size or in shape. In this way, a mixture slurry of the catalytic particles and zirconia binder particles was prepared. The ball mill stirring treatment was carried under the following conditions:

| | |
|---|---|
| Drum Capacity | 3.2 L |
| Ball | 1.3 L |
| | Y₂O₃ zirconia ball |
| | (Diameter: 10 mm, Bulk Specific Gravity: 3.4) |
| Catalytic material | 675 g |
| Zirconia binder | 75 g (Binder content: 10 wt%) |
| Water | 1 L |
| Vibration Force | 840 kgf |
| Vibration Frequency | 1750 vpm |
| Stirring Time | 1 h. |

The total amount of a catalytic material and the zirconia binder was preferably between 700 and 800 g.

A coating of the mixture slurry was applied as the under catalyst layer to a honeycomb substrate made of cordierite by dipping the honeycomb substrate in the mixture slurry, pulling it up and blowing off an excess of the mixture slurry by air. The honeycomb substrate with the coating was dried for one hour at 150°C and then calcined for two hours at 500°C. The honeycomb substrate used in this example had a size of 1 in. in diameter and 50 mm in length and had 400 cells per square inch. The wall thickness of each cell was 0.006 in.

While the zirconia balls were used in anticipation of special effects such as improved adhesion of the coating and improved thermal stability of a catalytic material such as alumina and ceria which were produced as a result of, for example, an ionexchange reaction between the zirconia balls and the zirconia binder particles, nevertheless, balls made of other materials may be of course employed.

A catalyst material for an over catalyst layer of the example catalyst E-I was prepared by evaporating a mixture of ceria suspended water, an acid solution of dinitro-diamine platinum (II) nitric acid and a solution of rhodium nitrate, and drying and solidifying the mixture. The solid mixture and zirconia particles were mixed and stirred together with water in the drum of the vibrating ball mill and pulverized to provide a mixture slurry. The ball mill stirring treatment was carried out for a catalyst material of the over catalyst layer in the same conditions as for the catalyst material of the under catalyst layer as set forth.

An over coating of the mixture slurry was applied as the over catalyst layer over the under catalyst layer by dipping the honeycomb substrate in the mixture slurry, pulling it up and blowing off an excess of the mixture slurry by air. The honeycomb substrate with the over coating was dried for one hour at 150°C and then calcined for two hours at 500°C.

### Example II

In this example, the specimen catalyst E-II was similar to the comparative example catalyst E-I except that an alumina binder was employed in place of the zirconia binder and under and over layers of the specimen catalyst E-ll were formed on a honeycomb substrate made of cordierite in the same manner and conditions as those of the example catalyst E-I.

### Comparative Example I

In the comparative example I, a mixture slurry for each of under and over catalyst layers was prepared by stirring a mixture of water, zirconia particles and catalytic particles in a stirrer such as a mixer with rotary blades (Ultra-Homo-Mixer U-3: marketed by Nihon Seiki Manufacturing Co., Ltd.) for 20 min at 12,000 rpm. Under and over catalyst layers of the comparative example catalyst C-I were formed on a honeycomb substrate made of cordierite in the same manner and conditions as those of the example catalyst E-I.

### Comparative Example II

In the comparative example II, a mixture slurry for each of under and over catalyst layers was prepared by stirring a mixture of water, alumina particles as a binder and catalytic particles in the same stirrer as described above in the same manner as the mixture slurry of comparative example I. Under and over catalyst layers of the comparative example catalyst C-II were formed on a honeycomb substrate made of cordierite in the same manner and conditions as those of the example catalyst E-I.

### Comparative Example III

In the comparative example III, a mixture slurry for each of under and over catalyst layers was prepared by stirring a mixture of water, silica particles as a binder and catalytic particles in the same stirrer as described above in the same manner as the mixture slurry of comparative example I. Under and over catalyst layers of the comparative example catalyst C-III were formed on a honeycomb substrate made of cordierite in the same manner and conditions as those of the example catalyst E-1.

### Comparative Example IV

In the comparative example IV, before preparing a mixture slurry for each of under and over catalyst layers, a mixture of water and an alumina binder were mixed in a ultra-disperser (ULTRA-TURRAX T50: marketed by IKA Company, Germany), which was a kind of mixer with rotary blades having a shearing function, for one hour at 7,000 rpm and then dispersed and stirred with ultrasonic waves. On the other hand, a mixture of water and catalytic particles were mixed in the ultra-disperser and then dispersed and stirred with ultrasonic waves. These mixtures were put together to provide a mixture slurry for under and over catalyst layers of the comparative example catalyst C-IV. The under and over catalyst layers were formed on a honeycomb substrate made of cordierite in the same manner and conditions as those of the example catalyst E-1.

Various tests, such as an ultrasonic peeling test, a thermal shock peeling test, exhaust gas purifying tests and an emission test, were made for the example catalysts and the comparative example catalysts to evaluate the effect of combinations of binder and stirring treatment on these catalysts.

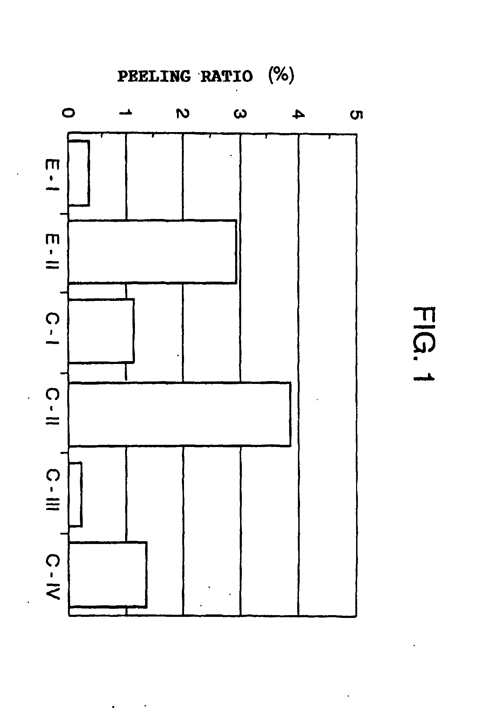

The ultrasonic peeling test was performed by, after subjecting the catalyst to an atmosphere heat treatment for 24 hours at 1,000°C and cooling it to a room temperature, applying ultrasonic waves to the catalyst in water for three hours. Measurements were made to determine the peeling ratio of catalyst based on dry mass (X) of the catalyst before the ultrasonic peeling test and dry mass (Y) of the catalyst after the ultrasonic peeling test. Figure 1 shows the peeling ratio (X - Y) x 100/ X.

As understood from Figure 1, the example catalyst E-I and specimen catalyst E-II, which were made of the ball milled catalytic and binder materials, show significantly lower peeling ratios as compared respectively with the comparative example catalysts C-I and C-II, which were made of the simply stirred catalyst material. This reveals that a catalyst material subjected to the ball mill stirring treatment improves adhesion of the catalyst coating to the honeycomb substrate made of such as cordierite. In particular, the example catalyst E-I has a peeling ratio one thirds as low as or less than those of the comparative example catalyst C-I and the comparative example catalyst C-IV which contains the alumina binder which shows a relatively high peeling ratio. It can be concluded from the result of the ultrasonic peeling test that the ball mill stirring treatment of a catalyst material with a zirconia binder is desirable to improve the peeling ratio of catalyst.

The comparative example catalyst C-III in which a silica binder was employed shows the lowest peeling ratio among the example catalysts and the comparative example catalysts. This is because the silica binder is turned so vitreous that the catalyst layer has a significantly minute structure with a result of causing aggravation of catalytic performance of the catalyst as will be described later.

The thermal shock peeling test was performed by, after having heated the catalysts E-I and C-IV for 6 hours at 1,000°C in an electric furnace, quenching them in water. Measurements were made to determine the peeling ratio of catalyst based on dry mass of the catalyst before and after the thermal shock peeling test. The example catalyst E-I showed a peeling ratio of 3.22 %, and the catalyst C-IV showed a peeling ratio of 4.34% This reveals that the example catalyst E-I has a high heat shock resistance.

Exhaust gas purifying performance was evaluated by measuring T-50 temperature and C-500 purification efficiency of the example catalyst E-I and the comparative example catalyst C-IV after heat treatment for 6 hours at 1,000°C in the electric furnace by rig test. The exhaust gas employed in the rig test was simulated as a gas produced during burning a fuel mixture which was controlled to vary an air-to-fuel ratio frequently between a lean condition at + 0.9 from a stoichiometric ratio of 14.7 and a rich condition at - 0.9 from the stoichiometric ratio of 14.7. The simulated exhaust gas was circulated at a space velocity of 6,000 h⁻¹ and had the following components;

| | |
|---|---|
| HC | 1500 ppmC |
| CO | 0.6 % |
| NOx | 0.1 % |
| C₂ | 0.6 % |
| CO₂ | 14% |
| N₂ | Reminder |

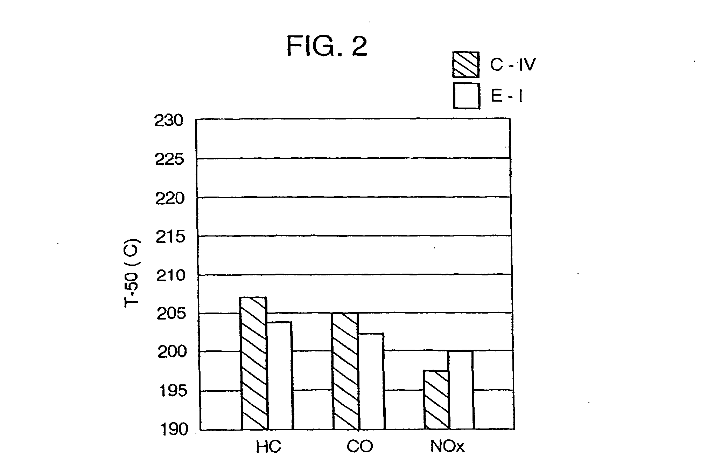

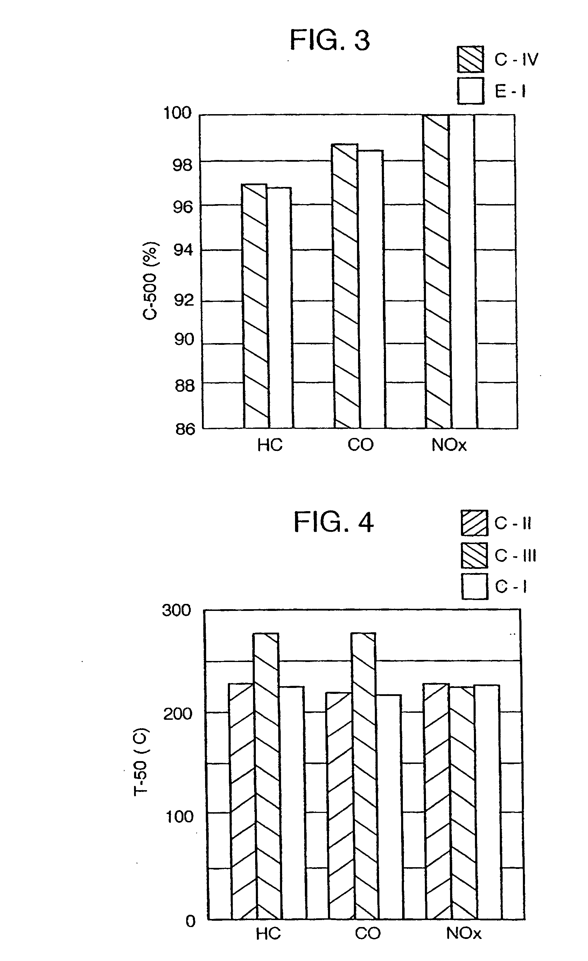

Figures 2 and 3 show T-50 temperature and C-500 purification efficiency, respectively. As seen in Figure 2, the example catalyst E-I has T-50 temperatures for HC and CO a few degrees in centigrade lower than those of the comparative example catalyst C-IV and, however, has T-50 temperature for NOx a few degrees in centigrade higher than that of the comparative example catalyst C-IV. Further, as seen in Figure 3, there is almost no difference in C-500 purification efficiency between the example catalyst E-I and the comparative example catalyst C-IV. This reveals that the catalyst containing a zirconia binder shows the almost same catalytic performance as the catalyst containing an alumina binder.

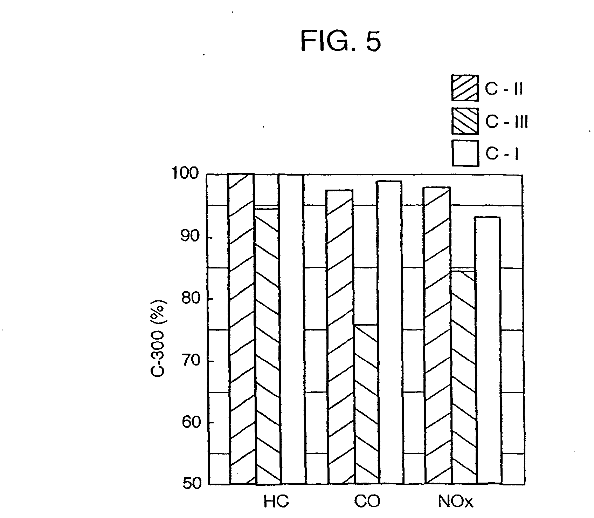

Measurements were made for the comparative example catalyst C-I - C-III by the same rig test as for the example catalyst E-I and the comparative example catalyst C-I to evaluate exhaust gas purifying performance, namely such as T-50 temperature and C-300 purification efficiency. The result is shown in Figures 4 and 5.

As seen in Figures 4 and 5, there is no significant difference in both T-50 temperatures and C-300 purification efficiency between the comparative example catalyst C-I which contains a zirconia binder and the comparative example catalyst C-II which contains an alumina binder. However, the comparative example catalyst C-III which contains a silica binder shows T-50 temperatures higher than the comparative example catalysts C-I and C-II for HC and CO and C-300 purification efficiency lower than the comparative example catalysts C-I and C-II. As was previously described, this is because the silica binder is turned so vitreous as to interrupt the exhaust gas from coming into contact with the catalysts components.

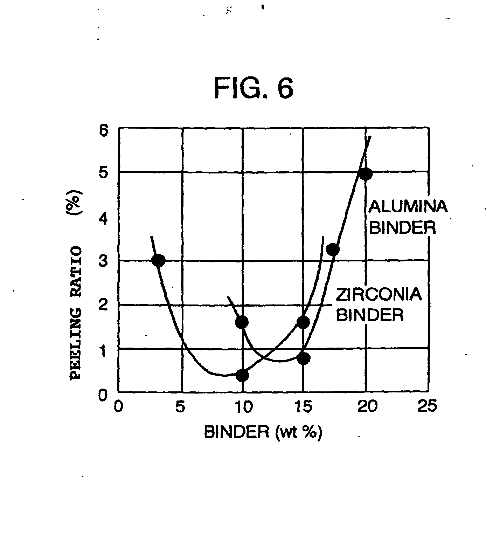

In order to determine the relationship between peeling ratio and zirconia binder content, the same peeling tests as described above were made for example catalysts E-I and comparative example catalyst C-IV which were differed in binder content. Specifically, peeling ratio measurements were made for example catalysts E-I which had different zirconia binder contents of 3 wt%, 10 wt% and 15 wt%, respectively, and whose mixture slurry was subjected to the ball mill stirring treatment, and comparative example catalysts C-IV having different alumina binder contents of 10 wt%, 15 wt%, 17wt% and 20 wt%, respectively, and whose mixture slurry was subjected to the ultrasonic wave stirring treatment. The result is shown in Figure 6.

As seen in Figure 6, the example catalyst E-I shows the lowest peeling ratio at a binder content of 10 wt% and is expected to show a peeling ratio lower than 1.5 % in a range of binder contents between 4 and 14 wt% and a peeling ratio lower than 1 % in a range of binder contents between 5 and 12 wt%. While the comparative example catalyst C-IV shows relatively low peeling ratio over binder contents, as compared with the example catalysts, although it contains an alumina binder, it shows a band of binder contents for providing a peeling ratio lower than 1.5 % which is approximately one seconds as narrow as the example catalyst E-I. This reveals that the example catalyst E-I, which contained an zirconia binder and whose mixture slurry was subjected to the ball mill stirring treatment, has a wide band of binder contents for a peeling ratio lower than 1.5 %. Accordingly, the combination of a zirconia binder and ball mill stirring treatment can be said to less affect catalysts in spite of producing variations and to provide for the catalyst coating with high adhesion to a substrate.

An on-board catalytic performance test was made for the example catalyst E-I and the comparative example catalyst C-IV. An example catalytic converter was prepared by applying the example catalyst E-I on a cordierite honeycomb substrate having 900 cells per square in. and a wall thickness of 0.006 in., and a comparative example catalytic converter was prepared by applying the comparative example catalyst C-IV on a cordierite honeycomb
substrate having 900 cells per square in. and a wall thickness of 0.006 in. After a 100 hours durability test in which each catalytic converter was exposed to exhaust gas from an in-line four cylinder engine having a 1500 cc displacement, an FTP test prescribed by U.S. EPA (Environment Protection Agency) was made for the respective catalytic converters to measure emission levels of HC, NOx. As a result, the example catalytic converter showed an HC emission level of 0,019 g/km (0.03 g/mile) and a NOx emission level of 0,028 g/km (0.045 g/mile) and the comparative example catalytic converter showed an HC emission level of 0,016 g/km (0.025 g/mile) and a NOx emission level of 0,122 g/km (0.195 g/mile). This demonstrates that the combination of a zirconia binder and ball mill stirring treatment provides for the catalytic converter with excellent onboard catalytic performance.

It is to be understood that although the present invention has been described with regard to preferred embodiments thereof, various other embodiments and variants may occur to those skilled in the art, which are within the scope of the invention, and such other embodiments and variants are intended to be covered by the following claims.

## Claims

1. A method of producing a catalyst for purifying exhaust gases which comprises a catalyst layer containing catalytic particles comprising catalytic metal particles carried by a support material and coated on a substrate,
**characterized by**
pulverizing a slurry of a mixture of said catalytic particles and zirconia binder particles containing water in a ball mill with zirconia balls charged therein, coating said pulverized mixture slurry on said substrate, and drying and calcining said mixture of said shaped zirconia binder particles and said catalytic particles coated on said substrate.

2. A method of producing a catalytic converter as defined in claim 1, **characterized in that** said substrate is made of a ceramic.

3. A method of producing a catalytic converter as defined in claim 1, **characterized in that** said support material comprises alumina.

4. A method of producing a catalytic converter as defined in claim 1, **characterized in that** said support material comprises a particle mixture of alumina and Ce-Pr compound oxide.

## Patentansprüche

1. Verfahren zur Herstellung eines Katalysators zur Reinigung von Abgasen, welches eine Katalysatorschicht umfasst, die katalytische Teilchen enthält, umfassend katalytische Metallteilchen, die von einem Trägermaterial getragen werden und auf einem Substrat aufbeschichtet sind,
**dadurch gekennzeichnet, dass**
eine Aufschlämmung einer Wasser enthaltenden Mischung aus den katalytischen Teilchen und Zirkoniumoxidbindemittelteilchen in einer Kugelmühle mit darin eingefüllten Zirkoniumoxidkugeln pulverisiert wird, die pulverisierte Mischungsaufschlämmung auf das Substrat aufbeschichtet wird und die Mischung aus den geformten Zirkoniumoxidbindemittelteilchen und den katalytischen Teilchen, welche auf dem Substrat aufbeschichtet ist, getrocknet und kalziniert wird.

2. Verfahren zur Herstellung eines katalytischen Konverters, wie in Anspruch 1 definiert, **dadurch gekennzeichnet, dass** das Substrat aus einer Keramik gemacht ist.

3. Verfahren zur Herstellung eines katalytischen Konverters, wie in Anspruch 1 definiert, **dadurch gekennzeichnet, dass** das Trägermaterial Aluminiumoxid umfasst.

4. Verfahren zur Herstellung eines katalytischen Konverters, wie in Anspruch 1 definiert, **dadurch gekennzeichnet, dass** das Trägermaterial eine Teilchenmischung aus Aluminiumoxid und Ce-Pr-Mischoxid umfasst.

## Revendications

1. Procédé pour produire un catalyseur pour purifier des gaz d'échappement, qui comprend une couche de catalyseur contenant des particules catalytiques comprenant des particules catalytiques métalliques portées par un matériau de support, et enduites sur un substrat,
**caractérisé par**
la pulvérisation d'une pâte d'un mélange desdites particules catalytiques et de particules de liant de zircone contenant de l'eau dans un broyeur à billes chargé de billes de zircone à l'intérieur, l'enduction dudit mélange de pâte pulvérisée sur ledit substrat, et le séchage et la calcination dudit mélange desdites particules façonnées de liant de zircone et desdites particules catalytiques enduites sur ledit substrat.

2. Procédé pour produire un convertisseur céramique selon la revendication 1, **caractérisé en ce que** ledit substrat est fabriqué dans une céramique.

3. Procédé pour produire un convertisseur catalytique selon la revendication 1, **caractérisé en ce que** ledit matériau de support comprend de l'alumine.

4. Procédé pour la production d'un convertisseur catalytique selon la revendication 1, **caractérisé en ce que** ledit matériau de support comprend un mélange de particules d'alumine et d'un oxyde de composé de Ce-Pr.
